# EUROPEAN PATENT APPLICATION

(11) **EP 4 481 290 A1**
(43) Date of publication of application: **25.12.2024**
(21) Application number: 23861867.2
(22) Date of filing: 11.04.2023
(51) Int. Cl.: F24F 11/61, F24F 11/64, F24F 11/88

(54) **TEMPERATURE CONTROL METHOD FOR AIR CONDITIONER**

(30) Priority: 08.09.2022 CN 202211100483
(71) Applicant: GD Midea Heating & Ventilating Equipment Co., Ltd., Foshan, Guangdong 528311 (CN); Midea Group Co., Ltd., Foshan, Guangdong 528311 (CN)
(72) Inventor: JI, Xuehuan, Foshan, Guangdong 528311 (CN); LI, Bin, Foshan, Guangdong 528311 (CN); ZHENG, Chunyuan, Foshan, Guangdong 528311 (CN); DING, Yunxiao, Foshan, Guangdong 528311 (CN); LI, Siqi, Foshan, Guangdong 528311 (CN)
(74) Representative: Ran, Handong
(86) International application number: PCT/CN2023/087644
(87) International publication number: WO 2024/051160

(57) **Abstract**

A temperature control method for an air conditioner, comprising: acquiring historical data of an air conditioner, wherein the historical data comprises indoor temperature data and user-set data; determining an initial temperature interval on the basis of the indoor temperature data; on the basis of a preset time length, correcting the temperature interval by means of the user-set data; and determining a set temperature of the air conditioner on the basis of the corrected temperature interval, so that the air conditioner runs on the basis of the set temperature.

## Description

### CROSS-REFERENCE TO RELATED APPLICATION

This application is based on and claims priority to Chinese patent application No. 202211100483.3 filed on September 8, 2022, the entire contents of which are incorporated herein by reference.

### FIELD

The present disclosure relates to the field of air conditioner technologies, and more particularly, to a temperature control method and apparatus for an air conditioner, and an electronic device.

### BACKGROUND

At present, a set temperature of an air conditioner is generally determined by the following manner: in an automatic mode, an interior unit for an air conditioner determines the set temperature of the air conditioner based on current values of an indoor temperature and an outdoor temperature by a predetermined algorithm.

However, the above manner is only a general calculation method for a comfortable temperature of most people, without considering influences of current air humidity, building thermal characteristics, a space envelope structure, and other parameters on the comfortable temperature of human body, let alone a user's age, clothing amount, temperature preference, and other factors to set the set temperature of the air conditioner. Therefore, the above manner cannot truthfully reflect user's real intention to use, nor can truly reflect user's actual temperature feeling, which is not intelligent and personalized enough, resulting in user's poor experience.

### SUMMARY

In view of this, an objective of the present disclosure is to provide a temperature control method and apparatus for an air conditioner, and an electronic device, which is capable of satisfying comfortable temperature preferences of different users, improving user experience.

An embodiment of the present disclosure provides a temperature control method for an air conditioner. The method includes: obtaining historical data of the air conditioner, the historical data including indoor temperature data and user setting data; determining an initial temperature interval based on the indoor temperature data; correcting the temperature interval by using the user setting data based on a predetermined time length; and determining a set temperature of the air conditioner based on the corrected temperature interval to cause the air conditioner to operate based on the set temperature.

In some embodiments of the present disclosure, a plurality of historical data of the air conditioner are stored in a server. The obtaining the historical data of the air conditioner includes: obtaining the historical data of the air conditioner from the server.

In some embodiments of the present disclosure, the determining the initial temperature interval based on the indoor temperature data includes: determining a plurality of target temperatures based on occurrence frequencies of respective temperatures in the indoor temperature data; and determining the initial temperature interval based on the plurality of target temperatures.

In some embodiments of the present disclosure, the correcting the temperature interval by using the user setting data includes: determining an interval average value of the temperature interval; determining a weighted average value of respective temperatures in the user setting data; and correcting the temperature interval based on the interval average value and the weighted average value.

In some embodiments of the present disclosure, the determining the weighted average value of the respective temperatures in the user setting data includes: determining weights of the respective temperatures based on occurrence frequencies of the respective temperatures in the user setting data; and calculating the weighted average value based on the respective temperatures and the weights of the respective temperatures in the user setting data.

In some embodiments of the present disclosure, the correcting the temperature interval based on the interval average value and the weighted average value includes: calculating a difference between the interval average value and the weighted average value; and correcting the temperature interval based on the difference and a predetermined correction rule.

In some embodiments of the present disclosure, the method further includes, subsequent to the determining the set temperature of the air conditioner based on the corrected temperature interval: labeling the set temperature of the air conditioner with a first label, and transmitting the set temperature of the air conditioner labeled with the first label to the server.

In some embodiments of the present disclosure, the method further includes, subsequent to the determining the set temperature of the air conditioner based on the corrected temperature interval: determining whether a user adjusts the set temperature when the air conditioner operates with the set temperature in each time length, in response to the user not adjusting the set temperature when the air conditioner operates with the set temperature in each time length, performing the correcting the temperature interval by using the user setting data based on the predetermined time length, and in response to the user adjusting the set temperature when the air conditioner operates with the set temperature in each time length, adjusting the time length.

In some embodiments of the present disclosure, the method further includes, subsequent to the determining whether the user adjusts the set temperature when the air conditioner operates with the set temperature in each time length: in response to the user adjusting the set temperature when the air conditioner operates with the set temperature in each time length, labeling the user-adjusted set temperature with a second label, and transmitting the user-adjusted set temperature labeled with the second label to the server.

In some embodiments of the present disclosure, the method further includes: determining an application scenario of the air conditioner when data missing of the historical data of the air conditioner occurs in the server; and determining the set temperature of the air conditioner based on the application scenario of the air conditioner.

In the embodiment of the present disclosure, the determining the set temperature of the air conditioner based on the application scenario of the air conditioner includes inputting the application scenario of the air conditioner into a predetermined model to obtain the set temperature of the air conditioner.

The embodiment of the present disclosure further provides a temperature control apparatus for an air conditioner. The apparatus includes: a historical data obtaining module configured to obtain historical data of the air conditioner, the historical data including indoor temperature data and user setting data; a temperature interval determination module configured to determine an initial temperature interval based on the indoor temperature data; a temperature interval correction module configured to correct the temperature interval by using the user setting data based on a predetermined time length; and a set temperature determination module configured to determine a set temperature of the air conditioner based on the corrected temperature interval to cause the air conditioner to operate based on the set temperature.

The embodiment of the present disclosure further provides an electronic device, including a processor and a memory storing computer-executable instructions executable by the processor. The processor, when executing the computer-executable instructions, implements the temperature control method for the air conditioner according to the above.

The embodiment of the present disclosure further provides a computer-readable storage medium having computer-executable instructions stored thereon. The computer-executable instructions, when invoked and executed by a processor, cause the processor to implement the temperature control method for the air conditioner according to the above.

The embodiment of the present disclosure further provides a heating, ventilation and air conditioning device. The heating, ventilation and air conditioning device includes a controller configured to implement the temperature control method for the air conditioner according to the above. Embodiments of the present disclosure bring the following advantageous effects.

With the temperature control method and apparatus for the air conditioner, and the electronic device according to the embodiments of the present disclosure, the initial temperature interval can be determined based on the indoor temperature data in the historical data of the air conditioner, the temperature interval can be corrected based on the user setting data in the historical data of the air conditioner, and the set temperature of the air conditioner can be determined based on the corrected temperature interval to cause the air conditioner to operate based on the set temperature. In this method, a temperature interval preferred by the user is obtained by combining historical data of the user, satisfying the comfortable temperature preferences of different users, improving the user experience.

Other features and advantages of the present disclosure will be described in the following specification, or some of the features and advantages may be inferred or determined from the specification without any doubt, or may be learned by practicing the above-described techniques of the present disclosure.

To make the above objectives, features, and advantages of the present disclosure more apparent and understood, preferred embodiments will be described in detail below with reference to the accompanying drawings.

### BRIEF DESCRIPTION OF THE DRAWINGS

In order to describe the technical solutions in the specific embodiments of the present disclosure or in the related art more clearly, the drawings to be used in the description of the specific embodiments or the related art will be briefly introduced below. Obviously, the drawings in the following description are only some embodiments of the present disclosure, and other drawings can be obtained by those of ordinary skill in the art based on these drawings without any inventive efforts.
FIG. 1 is a flowchart illustrating a temperature control method for an air conditioner according to an embodiment of the present disclosure.
FIG. 2 is a flowchart illustrating another temperature control method for an air conditioner according to an embodiment of the present disclosure.
FIG. 3 is a schematic diagram of temperature control for an air conditioner according to an embodiment of the present disclosure.
FIG. 4 is a schematic diagram of correcting a temperature interval according to an embodiment of the present disclosure.
FIG. 5 is a schematic diagram of an application scenario selection according to an embodiment of the present disclosure.
FIG. 6 is a schematic structural diagram of a temperature control apparatus for an air conditioner according to an embodiment of the present disclosure.
FIG. 7 is a schematic structural diagram of an electronic device according to an embodiment of the present disclosure.

### DETAILED DESCRIPTION OF THE EMBODIMENTS

To make objectives, technical solutions, and advantages of the present disclosure more apparent, the technical solutions according to the present disclosure will be described clearly and completely below in combination with accompanying drawings. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the protection scope of the present disclosure.

Generally, a set temperature of an air conditioner is determined in the following manner: in an automatic mode, an interior unit of the air conditioner determines the set temperature of the air conditioner based on current values of an indoor temperature and an outdoor temperature by a predetermined algorithm. However, the above manner is only a general calculation method for a comfortable temperature of most people, without considering influences of current air humidity, building thermal characteristics, a space envelope structure, and other parameters on the comfortable temperature of human body, let alone a user's age, clothing amount, temperature preference, and other factors to set the set temperature of the air conditioner. Therefore, the above manner cannot truthfully reflect user's real intention to use, nor can truly reflect user's actual temperature feeling, which is not intelligent and personalized enough, resulting in user's poor experience.

Based on this, the embodiments of the present disclosure provide a temperature control method and apparatus for an air conditioner, and an electronic device. To truly reflect a comfortable temperature of an air conditioner user and satisfy comfortable temperature preferences of different users, the embodiments of the present disclosure provide a method for identifying a user preference temperature interval based on historical operation data of an interior unit of the air conditioner. In this way, the user preference temperature interval is obtained by combining the historical data and current user will jointly, and a current temperature is set based on the preference temperature interval.

To facilitate understanding of this embodiment, the temperature control method for the air conditioner disclosed in the embodiments of the present disclosure is described in detail.

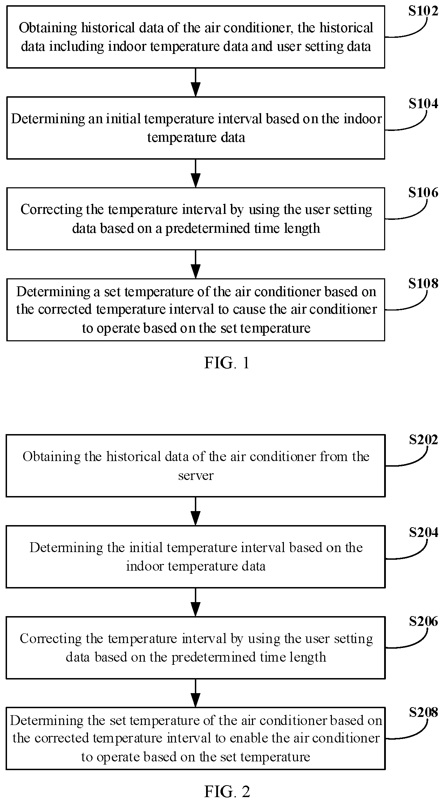

The embodiments of the present disclosure provide the temperature control method for the air conditioner. Reference can be made to a flowchart of a temperature control method for an air conditioner illustrated in FIG. 1. The temperature control method for the air conditioner includes operations at blocks.

At S102, historical data of the air conditioner is obtained. The historical data includes indoor temperature data and user setting data.

The historical data of the air conditioner in this embodiment may include indoor temperature data determined during a historical operation of the air conditioner and user setting data set by the user during the historical operation of the air conditioner. The air conditioner can transmit the indoor temperature data and the user setting data to a server during operation, and the server stores the indoor temperature data and the user setting data.

The indoor temperature data can be simply distinguished from the user setting data by the following method: the indoor temperature data is a temperature calculated by the air conditioner through algorithms, while the user setting data is a temperature manually set by the user.

However, the server may be a cloud server or a physical server. The embodiments are not limited in this regard. To distinguish the indoor temperature data from the user setting data, in this embodiment, the indoor temperature data and the user setting data may be labeled separately. When the indoor temperature data and the user setting data are transmitted and stored, the indoor temperature data and the user setting data may be stored with respective labels of the indoor temperature data and the user setting data. For example, the indoor temperature data is labeled with a label tag = 1, and the user setting data is labeled with a label tag = 0.

At S104, an initial temperature interval is determined based on the indoor temperature data.

Generally speaking, indoor temperature data within a certain time range can be obtained, for example, indoor temperature data within 20 days. Then, the initial temperature interval is determined based on occurrence frequencies of each temperature in the indoor temperature data within 20 days. For example, a plurality of temperature values (for example, 25, 26, 28, 27) with a higher occurrence frequency are determined from the indoor temperature data, and then the temperature interval (for example, [25, 28]) can be obtained by sorting the above temperature values.

At S106, the temperature interval is corrected by using the user setting data based on a predetermined time length.

In this embodiment, the temperature interval can be corrected by using the user setting data, allowing the temperature interval to more in line with user's usage habit. A time length of each interval can be corrected. For example, a temperature interval is corrected every 10 minutes.

Similar to the indoor temperature data, in this embodiment, a plurality of temperature values (for example, 25, 26, 27) with a higher occurrence frequency are determined from the user setting data, and then the temperature interval is corrected based on the above-mentioned temperature values. During correction, the correction is generally performed based on an average value of the temperature interval to be corrected and an average value of the user setting data. For example, when the average value of the temperature interval to be corrected is 25 and the average value of the user setting data is 24, it means that the user setting data is low, and thus the temperature interval can be reduced.

At S108, a set temperature of the air conditioner is determined based on the corrected temperature interval to cause the air conditioner to operate based on the set temperature.

After the temperature interval is corrected, the set temperature of the air conditioner may be determined based on the corrected temperature interval. The set temperature is a temperature with which the temperature interval operates. For example, when the corrected temperature interval is [25, 27], an average value of 26 of the temperature interval may be set as the set temperature of the air conditioner, and the air conditioner may operate based on the set temperature of 26.

With the temperature control method for the air conditioner according to the embodiments of the present disclosure, the initial temperature interval can be determined based on the indoor temperature data in the historical data of the air conditioner, the temperature interval can be corrected based on the user setting data in the historical data of the air conditioner, and the set temperature of the air conditioner can be determined based on the corrected temperature interval to cause the air conditioner to operate based on the set temperature. In this method, a temperature interval preferred by the user is obtained by combining historical data of the user, satisfying the comfortable temperature preferences of different users, improving the user experience.

According to this embodiment, another temperature control method for the air conditioner is provided, which is implemented on the basis of the above embodiment. FIG. 2 is a flowchart illustrating another temperature control method for the air conditioner. The temperature control method for the air conditioner in this embodiment includes operations at blocks.

At S202, the historical data of the air conditioner is obtained from the server.

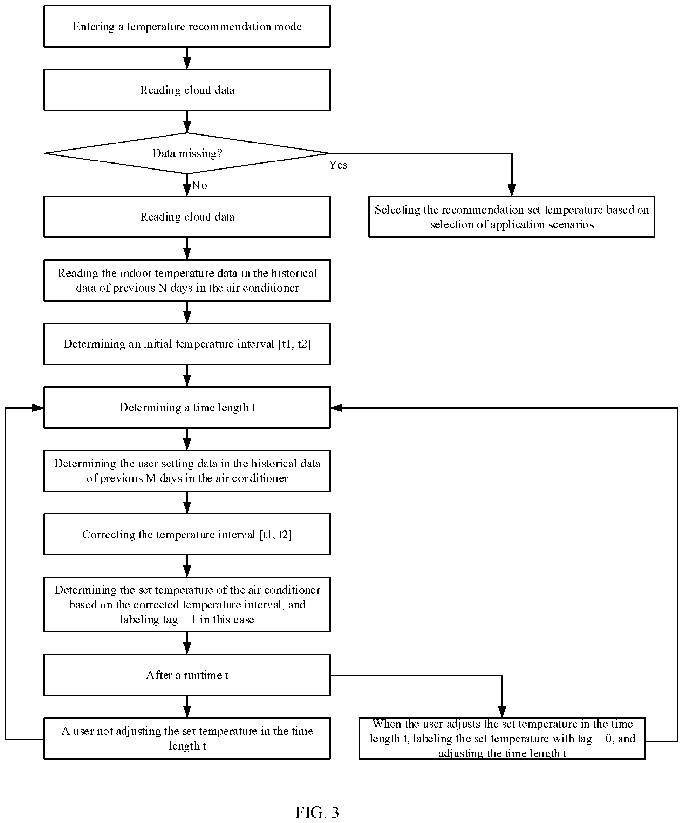

In this embodiment, a plurality of historical data of the air conditioner are stored in the server. As an example, the server is described as a cloud server. Reference can be made to FIG. 3 illustrating a schematic diagram of temperature control of an air conditioner. The user can choose whether to enter a temperature recommendation mode by an air conditioning control panel. When entering the temperature recommendation mode, cloud data is read to determine whether there is historical data of previous N days. When there is not historical data of previous N days, the set temperature can be recommended based on selection of air conditioning application scenarios. When there is historical data of previous N days, the steps described below are performed.

At S204, the initial temperature interval is determined based on the indoor temperature data.

In some embodiments, this embodiment may determine a plurality of target temperatures based on occurrence frequencies of respective temperatures in the indoor temperature data, and determine the initial temperature interval based on the plurality of target temperatures.

As illustrated in FIG. 3, the indoor temperature data in the historical data of the previous N days of the air conditioner is read, and then the initial temperature interval [t1, t2] is determined.

Based on the indoor temperature data of the previous N days, several temperatures with a highest occurrence frequency in indoor temperature values in the previous N days can be counted as target temperatures. An initial temperature interval [t1, t2] can be constructed based on the target temperatures. The initial temperature interval can be constructed for both a cooling operation condition and a heating operation condition. The above steps of constructing the initial temperature interval can be executed once a day.

With the method according to the embodiments of the present disclosure, an initial temperature interval can be formed by counting a temperature value having the highest occurrence frequency in the indoor temperature data in the historical data. The highest occurrence frequency of the temperature value in the initial temperature interval indicates an indoor temperature maintained by the air conditioner user for a long time when the user uses the air conditioner in the past period of time. Therefore, the method can more truly reflect the preferred temperature interval for the user.

At S206, the temperature interval is corrected by using the user setting data based on the predetermined time length.

As illustrated in FIG. 3, a time length t and a user setting temperature in historical data of previous M days for the air conditioner can be determined, and then the temperature interval [t1, t2] can be corrected. Based on the initial temperature interval [t1, t2], every time length t, and combined with the user setting temperature of the previous M days, the initial temperature interval is corrected based on a setting temperature adjusted by the user in the M days to obtain a new temperature preference interval. N is greater than M (N may range from 20 to 30 and M may range from 1 to 5).

With the above-described method according to the embodiments of the present disclosure, the calculated initial temperature interval can be corrected based on a weighted average value of the set temperature value for the duration in the user setting data of the air conditioning temperature adjusted artificially. Temperature values and their durations in recent user setting data comprehensively reflect user's real comfort feeling, and are also a further modification of temperature recommendation algorithm.

In some embodiments, this embodiment may correct the temperature interval by the following steps: determining an interval average value of the temperature interval; determining a weighted average value of respective temperatures in the user setting data; and correcting the temperature interval based on the interval average value and the weighted average value.

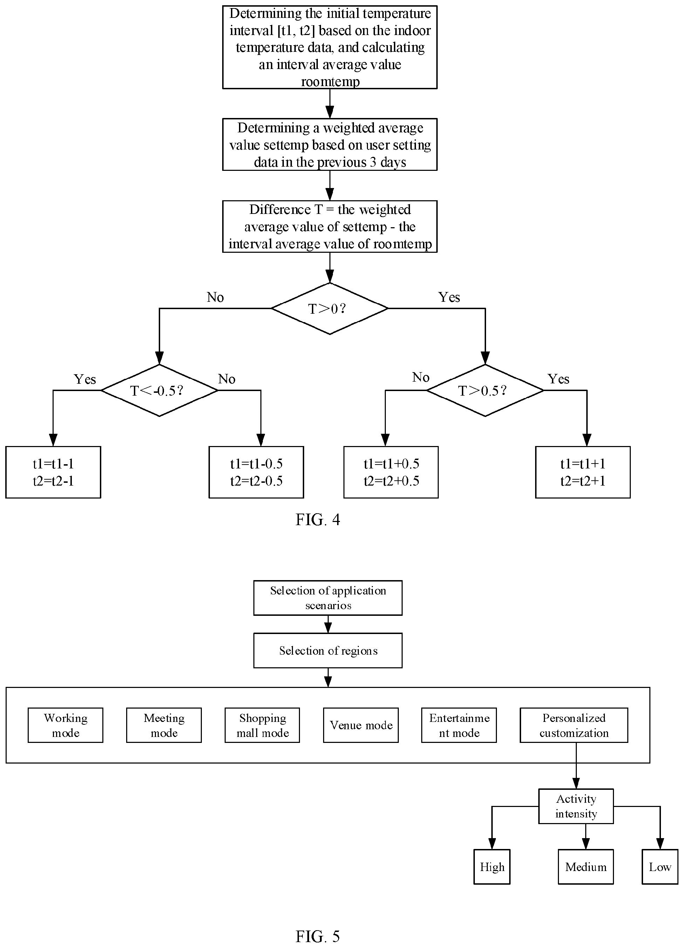

FIG. 4 is a schematic diagram of correcting a temperature interval. FIG. 4 illustrates a method of correcting the temperature interval by using user setting data in the recent three days, which can reflect comfortable temperature intention of the user in recent times and adjust comfortable temperature recommendation of algorithm.

As illustrated in FIG. 4, the initial temperature interval [t1, t2] is determined based on the indoor temperature data, and an interval average value roomtemp is calculated. A weighted average value settemp is determined based on user setting data in the previous 3 days. For example, for [t1, t2], the interval average value roomtemp equals (t1+t2)/2.

When calculating the weighted average value, this embodiment may determine weights of the respective temperatures based on occurrence frequencies of the respective temperatures in the user setting data, and calculate the weighted average value based on the respective temperatures and the weights of the respective temperatures in the user setting data.

For example, when the user setting data includes three temperature values: 25, 26, and 27, 25 appears 3 times, 26 appears 3 times, and 27 appears 4 times, a weight of 25 can be calculated as 3/(3 +3 +4) = 0.3, a weight of 26 can be calculated as 3/(3 +3 +4) = 0.3, and a weight of 27 can be calculated as 3/(3 +3 +4) = 0.4. A weighted average value settemp can be calculated as 25 × 0. 3 +26 × 0. 3 +27 × 0. 4 = 26.1.

After this embodiment, a difference between the interval average value and the weighted average value can be calculated. The temperature interval can be corrected based on the difference and a predetermined correction rule. As illustrated in FIG. 4, a difference T equals the weighted average value settemp minus the interval average value roomtemp. When T <-0.5, t1 equals t1-1 and t2 equals t2-1. When 0 ≥ T ≥ - 0.5, t1 equals t1-0.5 and t2 equals t2-0.5. When 0 < T ≤ 0.5, t1 equals t1+0.5 and t2 equals t2+0. 51. When T > 0.5, t1 equals t1+1 and t2 equals t2+1.

With the above-described method according to the embodiments of the present disclosure, during operation of the algorithm, it is possible to continuously detect whether current temperature setting is artificially adjusted. Artificially adjusting the set temperature indicates that a temperature set by the current method is not satisfying. Therefore, the user preferred temperature interval is timely adjusted based on latest change of the set temperature adjusted by the user, which can timely reflect an actual preferred temperature of a current user. When the user adjusts the set temperature by himself after the set temperature recommended by the preference temperature lasts for a certain period of time, it means that the current indoor temperature cannot meet user's needs. Therefore, the algorithm needs to be updated to set a temperature time interval. Algorithm temperature setting needs to be updated in time through time feedback.

At S208, the set temperature of the air conditioner is determined based on the corrected temperature interval to cause the air conditioner to operate based on the set temperature.

Simultaneously with the determining the set temperature of the air conditioner based on the corrected temperature interval, the method according to this embodiment further includes: labeling the set temperature of the air conditioner with a first label, and transmitting the set temperature of the air conditioner labeled with the first label to the server.

As illustrated in FIG. 3, the set temperature of the air conditioner can be determined based on the corrected temperature interval, and tag = 1 (that is, a first tag) can be labeled in this case. That is, in this embodiment, the recommended temperature value may be determined as the set temperature based on the temperature interval preferred by the user and a current air conditioning operation mode, and tag = 1 may be labeled simultaneously.

With the method according to the embodiments of the present disclosure, adjustment of the set temperature of the air conditioner during the operation of the algorithm can be labeled to distinguish whether the set temperature changes from the algorithm or the user. When using the preferred temperature interval to set the temperature, only artificial adjustment of the set temperature data can be used, influence of self-set temperature by the algorithm can be eliminated, in such a manner that the preferred temperature interval can more accurately reflect the current user's will to use, i.e., a user's comfortable temperature. In addition, influences of current climate and indoor temperature and humidity change on the user's comfortable temperature can be timely reflected by user's adjustment feedback.

In some embodiments, the above method according to this embodiment further includes determining whether a user adjusts the set temperature when the air conditioner operates with the set temperature in each time length. In response to the user not adjusting the set temperature when the air conditioner operates with the set temperature in each time length, the correcting the temperature interval by using the user setting data based on the predetermined time length is performed. In response to the user adjusting the set temperature when the air conditioner operates with the set temperature in each time length, the time length is adjusted.

Here, while adjusting the time length, the user-adjusted set temperature is labeled with a second label, and the user-adjusted set temperature labeled with the second label is transmitted to the server.

As illustrated in FIG. 3, after a runtime t, when the user does not adjust the set temperature in the time length t, the time length t is not corrected. When the user adjusts the set temperature in the time length t, the set temperature is labeled with tag = 0, and the time length t is adjusted.

After the time length t has elapsed, it can be determined whether the current set temperature is the temperature set by the algorithm before the time length t. When the current set temperature is the temperature set by the algorithm before the time length t, it can be determined that the user has not adjusted the set temperature in the time length t, and the temperature interval needs to be corrected continuously. When the current set temperature is not the temperature set by the algorithm before the time length t, it can be determined that the user has adjusted the set temperature in the time length t, the set temperature needs to be labeled with tag = 0, and the time length t is adjusted.

Further, an application scenario of the air conditioner is determined when data missing of the historical data of the air conditioner occurs in the server. The set temperature of the air conditioner is determined based on the application scenario of the air conditioner.

As illustrated in FIG. 3, when data missing of the historical data of the air conditioner occurs in the server, the recommended set temperature can be selected based on the application scenario. FIG. 5 is a schematic diagram of an application scenario selection. Different application scenario modes can be selected. Based on density of active people, activity intensity, selection of age level of people, an envelope structure, and values of different comfort temperature influencing factors (such as predetermined clothing thermal resistance, a human metabolism rate, a radiation temperature, etc.) in different application scenarios, and based on a predetermined value of each factor in the predetermined scenarios, a model can be constructed. For example, the application scenario of the air conditioner is input into a predetermined model to obtain the set temperature of the air conditioner.

The model may be a Predicted Mean Vote (PMV) model. Based on an outdoor ambient temperature collected by the current air conditioner, and a PMV model parameter corresponding to the predetermined application scenario, the corresponding clothing thermal resistance value and human metabolic rate are selected. A human body comfort temperature is calculated by a room comfort temperature model. In this case, the human body comfort temperature is the recommended set temperature.

As illustrated in Table 1, Table 1 shows possible metabolic levels of human body corresponding to different modes, and the ambient temperature of human body and an ambient average radiation temperature required by the PMV model. Since the indoor temperature does not change much, the ambient temperature of human body and the ambient average radiation temperature are replaced by an indoor temperature obtained at the current time in air conditioning data.

**Table 1**

| Application scenario selection | Mode or intensity of activity | Human metabolic rate (met) | Ambient temperature of human body | Ambient average radiation temperature |
|---|---|---|---|---|
| working mode | Slight movement in sitting positions | 1.2 | Indoor Temperature | Indoor Temperature |
| Meeting mode | Sitting without activity | 1 | Indoor Temperature | Indoor Temperature |
| Shopping mall mode | Standing moderate activity | 2 | Indoor Temperature | Indoor Temperature |
| Venue mode | Hiking 3km/h | 2.4 | Indoor Temperature | Indoor Temperature |
| Entertainment mode | Hiking 4km/h | 2.8 | Indoor Temperature | Indoor Temperature |
| Personalized customization | High/Medium/Low | 0.8~2.8 | Indoor Temperature | Indoor Temperature |

As illustrated in Table 2, Table 2 shows relative humidity and indoor wind speed corresponding to different regions and clothing thermal resistance corresponding to customary indoor clothing in each climate zone. Therefore, corresponding parameters of Table 1 and Table 2 can be built into the PMV model in this algorithm. The comfortable temperature is calculated based on the selection of application scenarios.

**Table 2**

| Climate zone | Winter | | | Summer | | |
|---|---|---|---|---|---|---|
| | Relative humidity (%) | Wind speed (m/s) | Clothing thermal resistance (clo) | Relative humidity (%) | Wind speed (m/s) | Clothing thermal resistance (clo) |
| Severe cold region | 70 | 0.1 | 0.93 | 60 | 0.15 | 0.26 |
| Cold region | 45 | 0.1 | 0.75 | 70 | 0.15 | 0.26 |
| Hot-summer cold-winter region | 80 | 0.15 | 0.99 | 75 | 0.25 | 0.21 |
| Hot-summer warm-winter region | 80 | 0.2 | 0.76 | 85 | 0.25 | 0.15 |
| Moderate region | 75 | 0.2 | 0.75 | 65 | 0.3 | 0.15 |

As for an overall flow of the method according to the embodiments of the present disclosure, the following is a description with a specific example: when the air conditioner is in the cooling operation condition, and when the air conditioner enters the temperature recommendation mode, indoor temperature data of the room in the past 30 days is counted, and the initial temperature interval is counted as [25, 28]. By using the user setting data in previous 3 days to correct the temperature interval [25, 28], the corrected temperature interval is [24, 27], and thus the recommended temperature is 26 degrees.

The user agrees with the recommended temperature of 26 degrees. After running for 10 minutes, the user doesn't feel cold. The user adjusts the set temperature to 20 degrees by himself, but in this case, a room temperature is 27 degrees and does not reach the set temperature. Therefore, the next time the air conditioner enters the recommended temperature setting mode, in this case the set temperature of 20 degrees does not have any effect on the comfortable temperature interval. When the room temperature reaches 26 degrees after 10 minutes, but the user still feels uncool, the room temperature is adjusted to 20 degrees. When entering this temperature recommendation mode again, the comfortable temperature interval is [23, 26], and the recommended setting temperature is 25 degrees.

With the method according to the embodiments of the present disclosure, scene control can be used for air conditioning settings that temporarily have no historical data. By pre-establishing a comfortable temperature model for common application scenarios of the air conditioner, and by selecting different usage scenarios and based on current operation conditions of the air conditioner, the comfortable temperature of the human body in the air conditioning application scenario is calculated, solving a problem that recommendation cannot be made due to absence of historical data.

To sum up, in this method, the initial temperature interval can be formed by counting the temperature value with the highest occurrence frequency in the indoor temperature data in the historical data. The highest occurrence frequency of the temperature value in the initial temperature interval indicates the indoor temperature maintained by the air conditioner user for a long time when the user uses the air conditioner in the past period of time. Therefore, this method can more truly reflect the user's preferred temperature interval.

In this method, the calculated initial temperature interval can be corrected based on the weighted average value of the set temperature value for the duration in the user setting data of the air conditioning temperature adjusted artificially. Temperature values and their durations in recent user setting data comprehensively reflect user's real comfort feeling, and are also a further modification of temperature recommendation algorithm.

In this method, during the operation of the algorithm, it is possible to continuously detect whether the current temperature setting is artificially adjusted. Artificially adjusting the set temperature indicates that the temperature set by the current method is not satisfying. Therefore, the user preferred temperature interval is timely adjusted based on the latest change of the set temperature adjusted by the user, which can timely reflect the actual preferred temperature of the current user. When the user adjusts the set temperature by himself after the set temperature recommended by the preference temperature lasts for a certain period of time, it means that the current indoor temperature cannot meet user's needs. Therefore, the algorithm needs to be updated to set the temperature time interval. Algorithm temperature setting can be updated in time through time feedback.

In this method, the adjustment of the set temperature of the air conditioner during the operation of the algorithm can be labeled to distinguish whether the set temperature changes from the algorithm or the user. When using the preferred temperature interval to set the temperature, only artificial adjustment of the set temperature data can be used, the influence of self-set temperature by the algorithm can be eliminated, in such a manner that the preferred temperature interval can more accurately reflect the current user's will to use, i.e., the user's comfortable temperature. In addition, influences of current climate and indoor temperature and humidity change on the user's comfortable temperature can be timely reflected by the user's adjustment feedback.

In this method, scene control can be used for air conditioning settings that temporarily have no historical data. By pre-establishing the comfortable temperature model for common application scenarios of the air conditioner, and by selecting different usage scenarios and based on current operation conditions of the air conditioner, the comfortable temperature of the human body in the air conditioning application scenario is calculated, solving the problem that recommendation cannot be made due to absence of historical data.

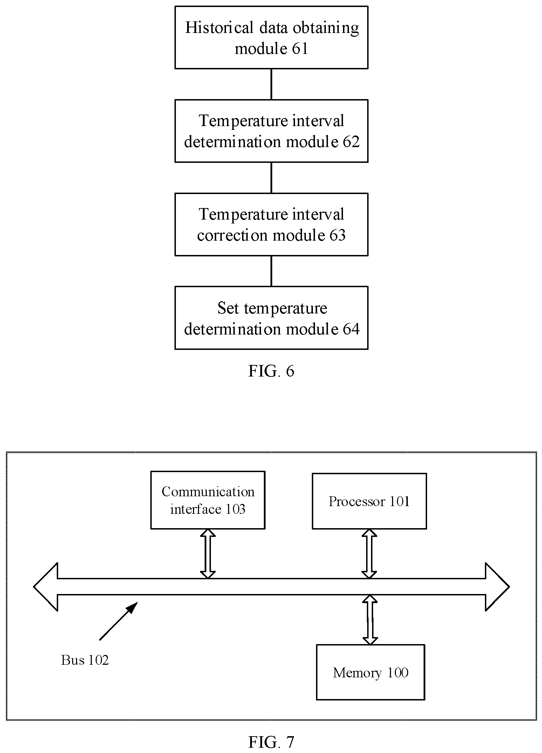

Corresponding to the above-described method embodiment, the embodiments of the present disclosure provide the temperature control apparatus for the air conditioner. FIG. 6 is a schematic structural diagram of a temperature control apparatus for an air conditioner. The temperature control apparatus for the air conditioner includes: a historical data obtaining module 61 configured to obtain historical data of the air conditioner, the historical data including indoor temperature data and user setting data; a temperature interval determination module 62 configured to determine an initial temperature interval based on the indoor temperature data; a temperature interval correction module 63 configured to correct the temperature interval by using the user setting data based on a predetermined time length; and a set temperature determination module 64 configured to determine a set temperature of the air conditioner based on the corrected temperature interval to cause the air conditioner to operate based on the set temperature.

With the temperature control apparatus for the air conditioner according to the embodiments of the present disclosure, the initial temperature interval can be determined based on the indoor temperature data in the historical data of the air conditioner, the temperature interval can be corrected based on the user setting data in the historical data of the air conditioner, and the set temperature of the air conditioner can be determined based on the corrected temperature interval to cause the air conditioner to operate based on the set temperature. In this method, the temperature interval preferred by the user is obtained by combining historical data of the user, satisfying the comfortable temperature preferences of different users, improving the user experience.

The plurality of historical data of the air conditioner are stored in the server. The historical data obtaining module is configured to obtain the historical data of the air conditioner from the server.

The temperature interval determination module is configured to determine the plurality of target temperatures based on the occurrence frequency of respective temperatures in the indoor temperature data, and determine the initial temperature interval based on the plurality of target temperatures.

The temperature interval correction module is configured to determine the interval average value of the temperature interval, determine the weighted average value of respective temperatures in the user setting data, and correct the temperature interval based on the interval average value and the weighted average value.

The temperature interval correction module is configured to determine the weights of the respective temperatures based on the occurrence frequency of the respective temperatures in the user setting data, and calculate the weighted average value based on the respective temperatures and the weights of the respective temperatures in the user setting data.

The temperature interval correction module is configured to calculate the difference between the interval average value and the weighted average value, and correct the temperature interval based on the difference and the predetermined correction rule.

The apparatus further includes a first label labeling module configured to label the set temperature of the air conditioner with the first label and transmit the set temperature of the air conditioner labeled with the first label to the server.

The apparatus further includes a time length adjustment module configured to determine whether the user adjusts the set temperature when the air conditioner operates with the set temperature in each time length. In response to the user not adjusting the set temperature when the air conditioner operates with the set temperature in each time length, the correcting the temperature interval by using the user setting data based on the predetermined time length is performed. In response to the user adjusting the set temperature when the air conditioner operates with the set temperature in each time length, the time length is adjusted.

The apparatus further includes a second label labeling module configured to: in response to the user adjusting the set temperature when the air conditioner operates with the set temperature in each time length, label the user-adjusted set temperature with the second label, and transmit the user-adjusted set temperature labeled with the second label to the server.

The apparatus further includes an application scenario processing module configured to determine the application scenario of the air conditioner when data missing of the historical data of the air conditioner occurs in the server, and determine the set temperature of the air conditioner based on the application scenario of the air conditioner.

For convenience and conciseness of the description, it will be clear to those skilled in the art that reference to a specific operation process of the temperature control apparatus for the air conditioner described above can be made to the corresponding process in the embodiment of the temperature control method for the air conditioner described above, and thus details thereof will be omitted here.

The embodiments of the present disclosure further provide the electronic device for performing the temperature control method for the air conditioner. Reference can be made to FIG. 7, which illustrates a schematic structural diagram of an electronic device. The electronic device includes a memory 100 and a processor 101. The memory 100 is configured to store one or more pieces of computer instructions, which is executed by the processor 101 to implement the temperature control method for the air conditioner according to the above.

Further, the electronic device illustrated in FIG. 7 further includes a bus 102 and a communication interface 103. The processor 101, the communication interface 103, and the memory 100 are connected to one another by the bus 102.

The memory 100 may include a high-speed Random Access Memory (RAM) or a non-volatile memory, such as at least one magnetic disk storage. A communication connection between one system network element and at least one other network element is realized by at least one communication interface 103 (which may be a wired or wireless communication interface), using networks such as the Internet, Wide Area Network (WAN), Local Area Network (LAN), and Metropolitan Area Network (MAN). The bus 102 may be an Industry Standard Architecture (ISA) bus, a Peripheral Component Interconnect (PCI) bus, an Extended Industry Standard Architecture (EISA) bus, etc. The bus may be classified into an address bus, a data bus, a control bus, etc. For ease of representation, only one bi-directional arrow is shown in FIG. 7, but it does not indicate that there is only one bus or one type of bus.

The processor 101 may be an integrated circuit chip having signal processing capabilities. In an implementation, actions of the above method may be accomplished by an integrated logic circuit in hardware in the processor 101 or by instructions in the form of software. The above processor 101 may be a general-purpose processor, including a Central Processing Unit (CPU), a Network Processor (NP), etc.; and may further be a Digital Signal Processor (DSP), an Application Specific Integrated Circuit (ASIC), a Field-Programmable Gate Array (FPGA) or other programmable logic devices, a discrete gate or a transistor logic device, and a discrete hardware component. The method, actions, and logic block diagrams according to any of the embodiments of the present disclosure may be implemented or performed. The general-purpose processor may be a microprocessor, or the processor may further be any conventional processor, etc. The actions of the method disclosed in combination with any of the embodiments of the present disclosure may be directly embodied as performed by a hardware decoding processor or performed by a combination of a hardware module and a software module in a decoding processor. A software module can be located in a mature storage medium in the field, such as a random access memory, a flash memory, a read-only memory, a programmable read-only memory, or an electrically erasable programmable memory, a register. The storage medium is located in the memory 100. The processor 101 is configured to read information in the memory 100, and complete the steps of the above method in combination with hardware thereof.

The embodiments of the present disclosure further provide a computer-readable storage medium having computer-executable instructions stored thereon. The computer-executable instructions, when invoked and executed by a processor, cause the processor to implement the temperature control method for the air conditioner according to the above. A specific implementation can be illustrated in the above method embodiments, and thus details thereof will be omitted here.

The temperature control method and apparatus for the air conditioner, and a computer program product of the electronic device according to the embodiments of the present disclosure include a computer-readable storage medium storing a program code. The instructions included in the program code can be used to execute the method in the foregoing method embodiments. The specific implementation can be illustrated in the above method embodiments, and thus details thereof will be omitted here.

The embodiments of the present disclosure further provide a heating, ventilation and air conditioning device. The heating, ventilation and air conditioning device includes a controller configured to implement the temperature control method for the air conditioner according to the above. The specific implementation can be illustrated in the above method embodiments, and thus details thereof will be omitted here. For convenience and conciseness of the description, it will be clear to those skilled in the art that reference to a specific operation process of the system and/or the apparatus described above can be made to the corresponding process in the method embodiments described above, and thus details thereof will be omitted here.

In addition, in the description of the embodiments of the present disclosure, unless otherwise clearly stipulated and limited, terms such as "mount," "connect," and "connect to," should be understood in a broad sense. For example, it may mean a fixed connection or a detachable connection or connection as one piece; mechanical connection or electrical connection; direct connection or indirect connection through an intermediate; or internal communication of two components. For those skilled in the art, specific meanings of the above-mentioned terms in the present disclosure can be understood according to specific circumstances.

When the functions are implemented in the form of a software functional unit and sold or used as a standalone product, they can be stored in a computer-readable storage medium. Based on this understanding, all or part of the technical solutions according to the present disclosure, or the part thereof that contributes to the related art, can be embodied in the form of a software product. The computer software product may be stored in a storage medium and contain instructions to cause a computer device (which may be a personal computer, a server, or a network device, etc.) to perform all or part of the steps of the method described in each of the embodiments. The above-mentioned storage medium may include various mediums capable of storing program codes, such as a Universal Serial Bus flash drive, a mobile hard disk, a Read-Only Memory (ROM), a Random Access Memory (RAM), a magnetic disk, or an optical disc.

In the description of the present disclosure, it should be noted that, the orientation or the position indicated by terms such as "center", "over", "below", "left", "right", "vertical", "horizontal", "inner", "outer" or the like should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure. In addition, the terms such as "first" "second" "third" are only used for descriptive purposes, and cannot be understood as indicating or implying relative importance.

Finally, it should be noted that the above-described embodiments are merely specific embodiments of the present disclosure, and are used to explain the technical solutions of the present disclosure, and are not limited thereto. The scope of protection of the present disclosure is not limited thereto. Although the present disclosure has been described in detail with reference to the above-described embodiments, it should be conceivable for those skilled in the art that, anyone skilled in the art can still modify the technical solutions described in the above-described embodiments or can easily conceive of changes, or make equivalent substitutions for some technical features within the technical scope of the present disclosure. However, these modifications, changes, or substitutions do not cause an essence of the corresponding technical solutions to deviate from the spirit and scope of the technical solutions of the embodiments of the present disclosure, and should fall within the scope of protection of the present disclosure. Therefore, these variants and alternatives are to be encompassed by the protect scope of present disclosure as defined by the claims as appended.

## Claims

1. A temperature control method for an air conditioner, wherein the method comprises:
obtaining historical data of the air conditioner, the historical data comprising indoor temperature data and user setting data;
determining an initial temperature interval based on the indoor temperature data;
correcting the temperature interval by using the user setting data based on a predetermined time length; and
determining a set temperature of the air conditioner based on the corrected temperature interval to cause the air conditioner to operate based on the set temperature.

2. The method according to claim 1, wherein a plurality of historical data of the air conditioner are stored in a server, and said obtaining the historical data of the air conditioner comprises:
obtaining the historical data of the air conditioner from the server.

3. The method according to claim 1 or 2, wherein said determining the initial temperature interval based on the indoor temperature data comprises:
determining a plurality of target temperatures based on occurrence frequencies of respective temperatures in the indoor temperature data; and
determining the initial temperature interval based on the plurality of target temperatures.

4. The method according to any one of claims 1 to 3, wherein said correcting the temperature interval by using the user setting data comprises:
determining an interval average value of the temperature interval;
determining a weighted average value of respective temperatures in the user setting data; and
correcting the temperature interval based on the interval average value and the weighted average value.

5. The method according to claim 4, wherein said determining the weighted average value of the respective temperatures in the user setting data comprises:
determining weights of the respective temperatures based on occurrence frequencies of the respective temperatures in the user setting data; and
calculating the weighted average value based on the respective temperatures and the weights of the respective temperatures in the user setting data.

6. The method according to claim 4, wherein said correcting the temperature interval based on the interval average value and the weighted average value comprises:
calculating a difference between the interval average value and the weighted average value; and
correcting the temperature interval based on the difference and a predetermined correction rule.

7. The method according to any one of claims 2 to 6, further comprising, subsequent to said determining the set temperature of the air conditioner based on the corrected temperature interval:
labeling the set temperature of the air conditioner with a first label, and transmitting the set temperature of the air conditioner labeled with the first label to the server.

8. The method according to any one of claims 2 to 7, further comprising, subsequent to said determining the set temperature of the air conditioner based on the corrected temperature interval:
determining whether a user adjusts the set temperature when the air conditioner operates with the set temperature in each time length,
in response to the user not adjusting the set temperature when the air conditioner operates with the set temperature in each time length, performing said correcting the temperature interval by using the user setting data based on the predetermined time length, and
in response to the user adjusting the set temperature when the air conditioner operates with the set temperature in each time length, adjusting the time length.

9. The method according to claim 8, further comprising, subsequent to said determining whether the user adjusts the set temperature when the air conditioner operates with the set temperature in each time length:
in response to the user adjusting the set temperature when the air conditioner operates with the set temperature in each time length, labeling the user-adjusted set temperature with a second label, and transmitting the user-adjusted set temperature labeled with the second label to the server.

10. The method according to any one of claims 2 to 9, further comprising:
determining an application scenario of the air conditioner when data missing of the historical data of the air conditioner occurs in the server; and
determining the set temperature of the air conditioner based on the application scenario of the air conditioner.

11. The method according to claim 10, wherein said determining the set temperature of the air conditioner based on the application scenario of the air conditioner comprises:
inputting the application scenario of the air conditioner into a predetermined model to obtain the set temperature of the air conditioner.

12. A temperature control apparatus for an air conditioner, wherein the apparatus comprises:
a historical data obtaining module configured to obtain historical data of the air conditioner, the historical data comprising indoor temperature data and user setting data;
a temperature interval determination module configured to determine an initial temperature interval based on the indoor temperature data;
a temperature interval correction module configured to correct the temperature interval by using the user setting data based on a predetermined time length; and
a set temperature determination module configured to determine a set temperature of the air conditioner based on the corrected temperature interval to cause the air conditioner to operate based on the set temperature.

13. An electronic device, comprising:
a processor; and
a memory storing computer-executable instructions executable by the processor, wherein the processor, when executing the computer-executable instructions, implements the temperature control method for the air conditioner according to any one of claims 1 to 11.

14. A computer-readable storage medium having computer-executable instructions stored thereon, wherein the computer-executable instructions, when invoked and executed by a processor, cause the processor to implement the temperature control method for the air conditioner according to any one of claims 1 to 11.

15. A heating, ventilation and air conditioning device, comprising a controller configured to implement the temperature control method for the air conditioner according to any one of claims 1 to 11.
